# EUROPÄISCHE PATENTSCHRIFT

(11) **EP 4 562 376 B1**
(45) Veröffentlichungstag und Bekanntmachung des Hinweises auf die Patenterteilung: **25.03.2026**
(21) Anmeldenummer: 23744425.2
(22) Anmeldetag: 17.07.2023
(51) Int. Cl.: G01F 1/66, G01F 1/667

(54) **CLAMP-ON-ULTRASCHALL-DURCHFLUSSMESSGERÄT**
CLAMP-ON ULTRASONIC FLOW METER
DÉBITMÈTRE À ULTRASONS À PINCE

(30) Priorität: 27.07.2022 DE 102022118791
(43) Veröffentlichungstag der Anmeldung: 04.06.2025
(73) Patentinhaber: Endress+Hauser Flowtec AG, 4153 Reinach (CH)
(72) Erfinder: WIEST, Achim, 79576 Weil am Rhein (DE); GRUNWALD, Sascha, 79585 Steinen (DE); BERGER, Andreas, 4228 Erschwil (CH); BRUMBERG, Oliver, 79618 Rheinfelden (DE)
(74) Vertreter: Endress + Hauser Group Services (Deutschland) AG+Co. KG
(86) Internationale Anmeldenummer: PCT/EP2023/069833
(87) Internationale Veröffentlichungsnummer: WO 2024/022877

(56) Entgegenhaltungen:
- EP-B1- 2 907 756
- CN-U- 210 677 174
- CN-U- 212 363 316

## Beschreibung

Die Erfindung betrifft ein Clamp-On-Ultraschall-Durchflussmessgerät zum Messen einer Durchflussgeschwindigkeit oder eines Volumendurchflusses eines durch eine Rohrleitung strömenden Mediums.

Solche Geräte sind beispielsweise aus der DE102020116181A1 bekannt. Die Befestigung von Ultraschallwandlern am Messrohr bzw. an der Rohrleitung wird beispielsweise über Spanngurte oder Magnete hergestellt. Problematisch bei solchen Geräten ist die Befestigung der einzelnen Ultraschallwandler an einem Messrohr oder einer Rohrleitung insbesondere dann, wenn die Ultraschallwandler sich abseits einer Vertikalen eines Querschnitts des Messrohrs bzw. der Rohrleitung befinden. In diesem Fall führen beispielsweise temperaturschwankungsverursachte Lockerungen oder Verrutschungen des Spannbands oder vibrationsbedingte Verrutschungen der Magnete zu einer Verschiebung der Ultraschallwandler in Richtung der Schwerkraft.

In der CN 212363316 U wird ein Ultraschall-Durchflussmesser mit einem verschiebbaren Gleitring in Verbindung mit Gegengewichtsblöcken gelehrt, mit dem sich der Ultraschallwandler leicht and der Außenseite der Rohrwandung drehen und so eine optimale Montageposition finden lässt. Nachteilig bei dieser Lösung ist, dass diese gerade für bestehende Rohrleitungen, die sich nicht mehr öffnen lassen, und somit auch für Anwendungen von Clamp-On-Ultraschallmessgeräte nicht geeignet ist.

Aufgabe der Erfindung ist es, eine robuste und sichere Befestigung für Clamp-On-Ultraschallwandler vorzuschlagen.

Die Aufgabe wird gelöst durch ein Clamp-On-Ultraschall-Durchflussmessgerät gemäß dem unabhängigen Anspruch 1.

Ein erfindungsgemäßes Clamp-On-Ultraschall-Durchflussmessgerät zum Messen einer Durchflussgeschwindigkeit oder eines Volumendurchflusses eines durch eine Rohrleitung strömenden Mediums umfasst
- zumindest einen Ultraschallwandler, insbesondere mindestens ein Paar Ultraschallwandler, wobei der mindestens eine Ultraschallwandler an der Rohrleitung mit insbesondere rundem Querschnitt oder an einem in die Rohrleitung integrierten Messrohr des Durchflussmessgeräts mit, insbesondere rundem, Querschnitt befestigt sind,
- eine elektronische Mess-/Betriebsschaltung zum Betreiben des mindestens einen Ultraschallwandlers sowie zum Auswerten von Messsignalen des mindestens einen Ultraschallwandlers und Bereitstellen von Messwerten,

wobei die Rohrleitung bzw. das Messrohr in Querschnitten jeweils einen Durchmesser in einem eine Rohrleitungsachse bzw. Messrohrachse enthaltenden Längsschnitt aufweist, wobei der mindestens eine Ultraschallwandler in einem zugehörigen Querschnitt bzgl. des Durchmessers umfänglich beabstandet angeordnet ist,
wobei jedem Ultraschallwandler ein Gegengewicht, inbesondere genau ein Gegengewicht (14) zugeordnet ist, welches bzgl. des vertikalen Durchmessers entgegengesetzt zum Ultraschallwandler beabstandet ist,
und ist dadurch gekennzeichnet, dass der Ultraschallwandler und das zugehöriges Gegengewicht durch ein flexibles, und insbesondere federndes, Verbindungselement, wie beispielsweise ein Gurt oder ein Seil oder eine Kette oder eine Feder, verbunden sind, welches Verbindungselement oberhalb, insbesondere ausschließlich oberhalb, des Messrohrs bzw. der Rohrleitung verläuft,
wobei sich das flexible Verbindungselement bei Anordnung des Clamp-On-Durchflussmessgerätes an der Rohrleitung oder an dem Messrohr in einem durch den Ultraschallwandler und das Gegengewicht gespannten Zustand befindet.

Auf diese Weise werden Einflüsse beispielsweise von Temperaturschwankungen oder Vibrationen auf Positionen der Ultraschallwandler verringert.

Das flexible Verbindungselement weist dabei in Längsrichtung eine Federkonstante größer als 50 Newton pro Millimeter, und insbesondere größer als 80 Newton pro Millimeter und bevorzugt größer als 100 Newton pro Millimeter auf.

In einer Ausgestaltung weist ein Ultraschallwandler eines Paars einen ersten umfänglichen Abstand ausgehend von einem Startpunkt bis zu einem Schwerpunkt des jeweiligen Ultraschallwandlers auf, wobei das zugehörige Gegengewicht einen zweiten umfänglichen Abstand zum vertikalen Durchmesser aufweist,
wobei Beträge des ersten umfänglichen Abstands und des zweiten umfänglichen Abstands weniger als 20% von einem Mittelwert der Beträge abweichen.

Auf diese Weise kann ein verschiebungsverursachender Einfluss auf den Ultraschallwandler abgeschwächt werden.

In einer Ausgestaltung weist der Ultraschallwandler eines Paars jeweils eine erste Masse auf, wobei das Gegengewicht jeweils eine zweite Masse aufweist,
wobei die erste Masse und die zweite Masse weniger als 20% von einem Mittelwert der Massen abweichen.

Auf diese Weise kann ein verschiebungsverursachender Einfluss auf den Ultraschallwandler abgeschwächt werden.

In einer Ausgestaltung ist die Befestigung der Ultraschallwandler am Messrohr bzw. an der Rohrleitung jeweils beispielsweise mittels eines Magneten oder eines das Messrohr bzw. die Rohrleitung umspannenden Spanngurts bewerkstelligt.

In einer Ausgestaltung weist das Gegengewicht eine rutschhemmende Oberfläche auf, welche Oberfläche mit dem Messrohr bzw. der Rohrleitung kontaktiert ist.

Auf diese Weise kann eine Verschiebung des Ultraschallwandlers besser gehemmt werden.

In einer Ausgestaltung ist die Rutschhemmung
durch eine Oberflächenstrukturierung wie beispielsweise eine Pyramiden- oder Nadelstruktur,
oder durch ein Elastomer wie beispielsweise Acrylnitril-Butadien-Kautschuk oder Silikon,
oder durch eine selbstklebende Beschichtung hergestellt.

In einer Ausgestaltung sind Ultraschallwandler und Gegengewicht jeweils beispielsweise durch Crimpen oder Schrauben am Spanngurt befestigt.

In einer Ausgestaltung bildet der Spanngurt das flexible Verbindungselement aus.

In einer Ausgestaltung ist das flexible Verbindungselement aus zumindest einem der folgenden Materialien gefertigt:
einem metallischen Material wie beispielsweise Stahl oder insbesondere Edelstahl oder einem Glas, Karbon, Polymer oder einem Naturstoff wie Hanf.

In einer Ausgestaltung weist das flexible Verbindungselement bei Abwesenheit eines Spanngurts oder einer Kette in einer Längsrichtung des Verbindungselements eine Federkonstante größer als 50 Newton pro Millimeter, und insbesondere größer als 80 Newton pro Millimeter und bevorzugt größer als 100 Newton pro Millimeter auf.

Bei einem Gurt oder Seil als flexibles Verbindungselement können die Materialen beispielsweise in Form von Fasern verarbeitet sein.

In einer Ausgestaltung weist bei Anwesenheit eines Spanngurts bzw. einer Kette das flexible Verbindungselement in einer Längsrichtung des Verbindungselements eine Federkonstante größer als 500 Newton pro Millimeter, und insbesondere größer als 800 Newton pro Millimeter und bevorzugt größer als 1000 Newton pro Millimeter auf
und/oder
wobei das flexible Verbindungselement in einer Längsrichtung des Verbindungselements eine Federkonstante aufweist, welche zumindest um einen Faktor 2 und insbesondere mindestens um einen Faktor 4 größer ist als eine Federkonstante des Spanngurts bzw. der Kette entlang einer entsprechenden Längsrichtung.

In einer Ausgestaltung umfasst das Clamp-On-ultraschall-Durchflussmessgerät zumindest zwei Paare Ultraschallwandler, wobei jeweils ein Ultraschallwandler zweier Paare Ultraschallwandler das Gegengewicht des jeweils anderen Ultraschallwandlers der zwei Paare Ultraschallwandler ausbildet.

In einer Ausgestaltung ist das Gegengewicht weder dazu eingerichtet und/oder geeignet, Ultraschallwellen zu erzeugen noch Ultraschallwellen zu empfangen.

In einer Ausgestaltung weist das Gegengewicht keinen Ultraschallwandler auf bzw. ist kein Ultraschallwandler auf dem Gegengewicht angeordnet.

In einer Ausgestaltung sind der Ultraschallwandler, das Gegengewicht und das Verbindungselement derart ausgestaltet, dass der Ultraschallwandler bei einem, insbesondere temperaturbedingten, mechanischen Verformen der Rohrleitung bzw. des Messrohres in seiner Montageposition bleibt.

Im Folgenden wird die Erfindung anhand von Ausführungsbeispielen beschrieben.
Fig. 1 skizziert ein beispielhaftes schematisches Clamp-On-Ultraschall-Durchflussmessgerät gemäß dem Stand der Technik in einer Seitenansicht;
Fig. 2 skizziert eine beispielhafte schematische Umsetzung der Erfindung in einer Fronansicht.

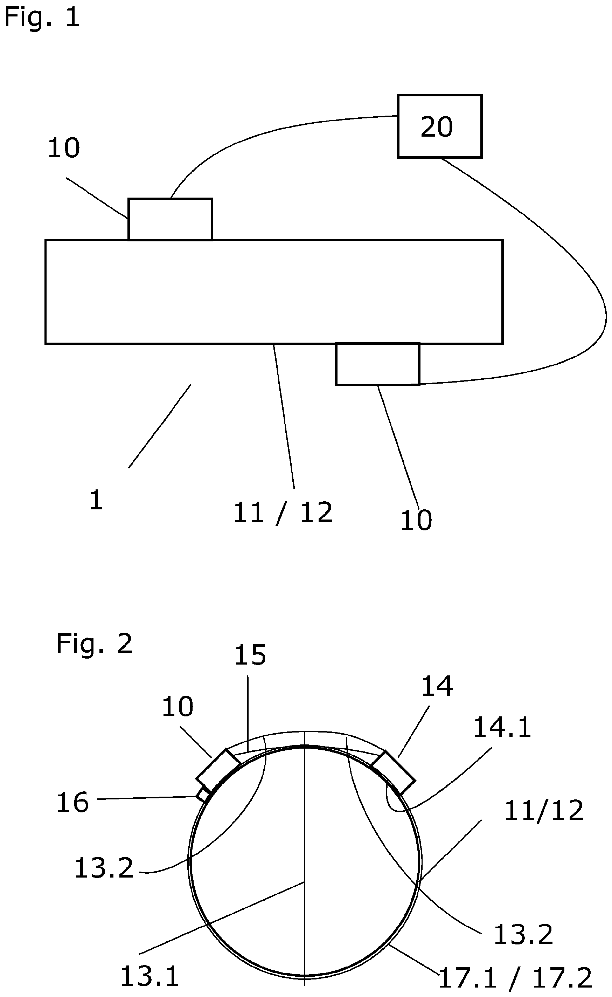

Fig. 1 zeigt ein beispielhaftes Clamp-On-Ultraschall-Durchflussmessgerät mit zwei Ultraschallwandlern, welche an einem in eine Rohrleitung integrierten Messrohr 12 oder an einer Rohrleitung 11 angeordnet sind und dazu eingerichtet sind wechselseitig Ultraschallsignale zu senden und zu empfangen. Eine elektronische Mess-/Betriebsschaltung 20 ist zum Betreiben der Ultraschallwandler sowie zum Auswerten von Messsignalen der Ultraschallwandler und Bereitstellen von Messwerten eingerichtet. Beispielsweise aus Laufzeitdifferenzen von Ultraschallsignalen in und gegen eine Strömungsrichtung eines Mediums der Rohrleitung kann auf eine Durchflussgeschwindigkeit oder eine Schallgeschwindigkeit des Mediums geschlossen werden. Es sind Clamp-On-Ultraschall-Durchflussmessgeräte bekannt, bei welchen die Ultraschallsignale das Messrohr bzw. die Rohrleitung einfach oder mehrfach durchlaufen. Solche Messgeräte können ein oder mehrere Paare von Ultraschallwandlern aufweisen. Es sind auch Doppler-Messgeräte bekannt, welche nur einen Ultraschallwandler für Durchflussmessungen benötigen.

Fig. 2 zeigt eine Frontansicht auf ein beispielhaftes erfindungsgemäßes Clamp-On-Ultraschall-Durchflussmessgerät mit einem Paar Ultraschallwandlern, welche hintereinander angeordnet sind und Ultraschallsignale mit einer geradzahligen Messrohr- bzw. Rohrleitungstraversenzahl durch das Medium senden. Bzgl. der prinzipiellen technischen Funktionsweise gilt das zu Fig. 1 Gesagte.

Die Rohrleitung 11 bzw. das Messrohr 12 weist in Querschnitten jeweils einen Durchmesser 13.1 in einem eine Rohrleitungsachse bzw. Messrohrachse enthaltenden Längsschnitt auf, wobei die Ultraschallwandler in einem zugehörigen Querschnitt bzgl. des Durchmessers einen umfänglichen Abstand 13.2 aufweisen, wobei jedem Ultraschallwandler erfindungsgemäß ein Gegengewicht zugeordnet ist, welches bzgl. des vertikalen Durchmessers entgegengesetzt zum Ultraschallwandler beabstandet ist.

Weiter erfindungsgemäß sind ein Ultraschallwandler und ein zugehöriges Gegengewicht durch ein flexibles Verbindungselement 15 wie beispielsweise ein Gurt oder ein Seil verbunden, welches Verbindungselement oberhalb des Messrohrs bzw. der Rohrleitung verläuft, wobei sich das flexible Verbindungselement in einem durch den Ultraschallwandler und das Gegengewicht gespannten Zustand befindet. Auf diese Weise wird eine Umfangskomponente einer Gewichtskraft des Ultraschallwandlers 10 in ihrem Betrag verkleinert und somit eine Verschiebungsgefahr des Sensors verhindert.

In einer Ausgestaltung weist das Gegengewicht 14 eine rutschhemmende Oberfläche 14.1 auf, welche Oberfläche mit dem Messrohr 12 bzw. der Rohrleitung 11 kontaktiert ist. Auf diese Weise kann der Ultraschallwandler weiter stabilisiert werden, da das Gegengewicht eine gesicherte Positionierung aufweist. Die Rutschhemmung kann durch eine Oberflächenstrukturierung wie beispielsweise eine Pyramiden- oder Nadelstruktur, oder durch ein Elastomer wie beispielsweise Acrylnitril-Butadien-Kautschuk oder Silikon, oder durch eine selbstklebende Beschichtung eingerichtet sein.

In einer Ausgestaltung weist der Ultraschallwandler eines Paars jeweils einen ersten umfänglichen Abstand 13.2 zum vertikalen Durchmesser auf, wobei das Gegengewicht jeweils einen zweiten umfänglichen Abstand zum vertikalen Durchmesser aufweist, wobei Beträge des ersten umfänglichen Abstands und des zweiten umfänglichen Abstands weniger als 20% von einem Mittelwert der Beträge abweichen. Dies trägt zu einer besseren Ausgleichbarkeit der Umfangskomponente der Gewichtskraft des Ultraschallwandlers bei.

In einer Ausgestaltung weist der Ultraschallwandler eines Paars jeweils eine erste Masse auf, wobei das Gegengewicht jeweils eine zweite Masse aufweist, wobei die erste Masse und die zweite Masse weniger als 20% von einem Mittelwert der Massen abweichen. Dies trägt zu einer besseren Ausgleichbarkeit der Umfangskomponente der Gewichtskraft des Ultraschallwandlers bei.

Die Befestigung der Ultraschallwandler 10 am Messrohr 12 bzw. an der Rohrleitung 11 kann wie hier beispielsweise gezeigt jeweils mittels eines Magnets 16 und/oder eines das Messrohr bzw. die Rohrleitung umspannenden Spanngurts 17.1 oder einer Kette 17.2 bewerkstelligt sein.

Ultraschallwandler und Gegengewicht können dabei jeweils durch Crimpen oder Schrauben am Spanngurt befestigt sein.

In einer Ausgestaltung bildet der Spanngurt 17.1 bzw. die Kette 17.2 das flexible Verbindungselement 15 aus.

In einer Ausgestaltung weist das flexible Verbindungselement in einer Längsrichtung des Verbindungselements eine Federkonstante größer als 50 Newton pro Millimeter, und insbesondere größer als 80 Newton pro Millimeter und bevorzugt größer als 100 Newton pro Millimeter auf.

In einer Ausgestaltung weist das flexible Verbindungselement in einer Längsrichtung des Verbindungselements eine Federkonstante größer als 500 Newton pro Millimeter, und insbesondere größer als 800 Newton pro Millimeter und bevorzugt größer als 1000 Newton pro Millimeter auf,
und/oder
das flexible Verbindungselement weist in einer Längsrichtung des Verbindungselements eine Federkonstante auf, welche zumindest um einen Faktor 2 und insbesondere mindestens um einen Faktor 4 größer ist als eine Federkonstante des Spanngurts bzw. der Kette entlang einer entsprechenden Längsrichtung.

Die von den Ultraschallwandlern erzeugten Ultraschallsignale können das Messrohr bzw. die Rohrleitung einfach oder mehrfach durchlaufen, also Ein- bzw. Mehrtraversensysteme sein. Die in Fig. 2 gezeigte Anzahl und Anordnung von Ultraschallwandlern ist rein beispielhaft. Die Erfindung ist auf alle Ultraschallwandleranordnungen anwendbar. Beispielsweise kann das Clamp-On-Ultraschall-Durchflussmessgerät mehrere Ultraschallwandlerpaare aufweisen, wobei jeweils ein Ultraschallwandler zweier verschiedener Paare das Gegengewicht das Gegengewicht des jeweils anderen Ultraschallwandlers der zwei verschiedenen Paare ausbildet.

In einer Ausgestaltung ist das Gegengewicht weder dazu eingerichtet und/oder geeignet, Ultraschallwellen zu erzeugen noch Ultraschallwellen zu empfangen. Demnach handelt es sich bei dem Gegengewicht selbst nicht wie gemäß der obigen Ausgestaltung um einen Ultraschallwandler, sondern um einen einfachen inaktiven, d.h. akustisch nicht aktiven, Körper.

In einer Ausgestaltung weist das Gegengewicht keinen Ultraschallwandler auf bzw. ist kein Ultraschallwandler auf dem Gegengewicht angeordnet. Somit handelt es sich bei dem Gegengewicht ebenfalls nicht um einen Adapter Sensoradapter zum Aufnehmen eines Ultraschallwandlers oder ähnliches.

In einer Ausgestaltung sind der Ultraschallwandler, das Gegengewicht und das Verbindungselement derart ausgestaltet, dass der Ultraschallwandler bei einem, insbesondere temperaturbedingten, mechanischen Verformen der Rohrleitung bzw. des Messrohres in seiner Montageposition bleibt. Bei der Montage der Anordnung an die Rohrleitung bzw. an dem Messrohr befindet sich der Ultraschallwandler in seiner Montageposition. Ändert sich der Durchmesser der Rohrleitung bzw. des Messrohres auf Grund temperatur- oder druckbedingter Einflüsse, so verrutscht der Ultraschallwandler erfindungsgemäßen nicht, sondern bleibt fix in seiner ursprünglichen Montageposition. Die Position des Ultraschallwandlers kann sich dabei zwar radial zum Zentrum ändern, jedoch nicht in Umfangsrichtung.

### Bezugszeichenliste

- 1: Clamp-On-Ultraschall-Durchflussmessgerät
- 10: Ultraschallwandler
- 11: Rohrleitung
- 12: Messrohr
- 13.1: Durchmesser
- 13.2: umfänglicher Abstand
- 14: Gegengewicht
- 14.1: rutschhemmende Oberfläche
- 15: flexibles Verbindungselement
- 16: Magnet
- 17.1: Spanngurt
- 17.2: Kette
- 20: Elektronische Mess-/Betriebsschaltung

## Patentansprüche

1. Clamp-On-Ultraschall-Durchflussmessgerät (1) zum Messen einer Durchflussgeschwindigkeit oder eines Volumendurchflusses eines durch eine Rohrleitung (11) strömenden Mediums umfassend:
- zumindest einen Ultraschallwandler, insbesondere mindestens ein Paar Ultraschallwandler (10), wobei der mindestens eine Ultraschallwandler an der Rohrleitung (11) mit insbesondere rundem Querschnitt oder an einem in die Rohrleitung integrierten Messrohr (12) des Durchflussmessgeräts mit, insbesondere rundem, Querschnitt befestigt sind,
- eine elektronische Mess-/Betriebsschaltung (20) zum Betreiben des mindestens einen Ultraschallwandlers sowie zum Auswerten von Messsignalen des mindestens einen Ultraschallwandlers und Bereitstellen von Messwerten,
wobei die Rohrleitung bzw. das Messrohr in Querschnitten jeweils einen Durchmesser (13.1) in einem eine Rohrleitungsachse bzw. Messrohrachse enthaltenden Längsschnitt aufweist, wobei der mindestens eine Ultraschallwandler in einem zugehörigen Querschnitt bzgl. des Durchmessers umfänglich beabstandet angeordnet ist,
wobei jedem Ultraschallwandler ein Gegengewicht (14), insbesondere genau ein Gegengewicht (14), zugeordnet ist, welches bzgl. des vertikalen Durchmessers entgegengesetzt zum Ultraschallwandler beabstandet ist,
**dadurch gekennzeichnet, dass** der Ultraschallwandler und das zugehörige Gegengewicht (14) durch ein flexibles, und insbesondere federndes, Verbindungselement (15), wie beispielsweise ein Gurt oder ein Seil oder eine Kette oder eine Feder, verbunden sind, welches Verbindungselement oberhalb, insbesondere ausschließlich oberhalb, des Messrohrs bzw. der Rohrleitung verläuft,
wobei sich das flexible Verbindungselement (15) bei Anordnung des Clamp-On-Ultraschall-Durchflussmessgerätes (1) an der Rohrleitung oder an dem Messrohr in einem durch den Ultraschallwandler und das Gegengewicht gespannten Zustand befindet.

2. Clamp-On-Ultraschall-Durchflussmessgerät nach Anspruch 1,
wobei jeder Ultraschallwandler ausgehend von einem Startpunkt bis zu einem Schwerpunkt des jeweiligen Ultraschallwandlers jeweils einen ersten umfänglichen Abstand (13.2) zum vertikalen Durchmesser aufweist, wobei das Gegengewicht (14) jeweils einen zweiten umfänglichen Abstand (13.2) zum vertikalen Durchmesser aufweist,
wobei Beträge des ersten umfänglichen Abstands und des zweiten umfänglichen Abstands weniger als 20% von einem Mittelwert der Beträge abweichen.

3. Clamp-On-Ultraschall-Durchflussmessgerät nach Anspruch 1 oder 2,
wobei jeder Ultraschallwandler (10) jeweils eine erste Masse aufweist, wobei das Gegengewicht (14) jeweils eine zweite Masse aufweist,
wobei die erste Masse und die zweite Masse weniger als 20% von einem Mittelwert der Massen abweichen.

4. Clamp-On-Ultraschall-Durchflussmessgerät nach einem der vorigen Ansprüche,
wobei die Befestigung des mindestens einen Ultraschallwandler am Messrohr bzw. an der Rohrleitung jeweils mittels eines Magnets (16) oder eines das Messrohr bzw. die Rohrleitung umspannenden Spanngurts (17.1) oder Kette (17.2) bewerkstelligt ist.

5. Clamp-On-Ultraschall-Durchflussmessgerät nach einem der vorigen Ansprüche,
wobei das Gegengewicht (14) eine rutschhemmende Oberfläche (14.1) aufweist, welche Oberfläche mit dem Messrohr (12) bzw. der Rohrleitung (11) kontaktiert ist.

6. Clamp-On-Ultraschall-Durchflussmessgerät nach Anspruch 5,
wobei die Rutschhemmung
durch eine Oberflächenstrukturierung wie beispielsweise eine Pyramiden- oder Nadelstruktur,
oder durch ein Elastomer wie beispielsweise Acrylnitril-Butadien-Kautschuk oder Silikon,
oder durch eine selbstklebende Beschichtung eingerichtet ist.

7. Clamp-On-Ultraschall-Durchflussmessgerät nach einem der Ansprüche 4 bis 6,
wobei Ultraschallwandler (10) und Gegengewicht (14) jeweils durch eine Befestigung wie Crimpen, Schrauben, Kleben, Schweissen, Nieten am Spanngurt befestigt sind.

8. Clamp-On-Ultraschall-Durchflussmessgerät nach einem der Ansprüche 4 bis 7,
wobei der Spanngurt (17) das flexible Verbindungselement (15) ausbildet.

9. Clamp-On-Ultraschall-Durchflussmessgerät nach einem der vorigen Ansprüche,
wobei das flexible Verbindungselement (15) aus zumindest einem der folgenden Materialien gefertigt ist:
einem metallischen Material wie beispielsweise Stahl oder insbesondere Edelstahl oder einem Glas, Karbon, Polymer.

10. Clamp-On-Ultraschall-Durchflussmessgerät nach einem der vorigen Ansprüche, sofern nicht unmittelbar oder mittelbar abhängig von Anspruch 4,
wobei das flexible Verbindungselement (15) in einer Längsrichtung des Verbindungselements (15) eine Federkonstante größer als 50 Newton pro Millimeter, und insbesondere größer als 80 Newton pro Millimeter und bevorzugt größer als 100 Newton pro Millimeter aufweist.

11. Clamp-On-Ultraschall-Durchflussmessgerät nach einem der Ansprüche 4 bis 9 ohne 7,
wobei das flexible Verbindungselement (15) in einer Längsrichtung des Verbindungselements (15) eine Federkonstante größer als 500 Newton pro Millimeter, und insbesondere größer als 800 Newton pro Millimeter und bevorzugt größer als 1000 Newton pro Millimeter aufweist,
und/oder
wobei das flexible Verbindungselement (15) in einer Längsrichtung des Verbindungselements (15) eine Federkonstante aufweist, welche zumindest um einen Faktor 2 und insbesondere mindestens um einen Faktor 4 größer ist als eine Federkonstante des Spanngurts bzw. der Kette entlang einer entsprechenden Längsrichtung.

12. Clamp-On-Ultraschall-Durchflussmessgerät nach einem der vorigen Ansprüche,
umfassend zumindest zwei Paare Ultraschallwandler, wobei jeweils ein Ultraschallwandler (10) zweier Paare Ultraschallwandler das Gegengewicht (14) des jeweils anderen Ultraschallwandlers der zwei Paare Ultraschallwandler ausbildet.

13. Clamp-On-Ultraschall-Durchflussmessgerät nach einem der Ansprüche 1 bis 11,
wobei das Gegengewicht (14) weder dazu eingerichtet und/oder geeignet ist, Ultraschallwellen zu erzeugen noch Ultraschallwellen zu empfangen.

14. Clamp-On-Ultraschall-Durchflussmessgerät nach Anspruch 13,
wobei das Gegengewicht (14) keinen Ultraschallwandler aufweist bzw. kein Ultraschallwandler auf dem Gegengewicht (14) angeordnet ist.

15. Clamp-On-Ultraschall-Durchflussmessgerät nach einem der vorherigen Ansprüche,
wobei der Ultraschallwandler, das Gegengewicht (14) und das Verbindungselement (15) derart ausgestaltet sind, dass der Ultraschallwandler bei einem, insbesondere temperaturbedingten, mechanischen Verformen der Rohrleitung bzw. des Messrohres in seiner Montageposition bleibt.

## Claims

1. Clamp-on ultrasonic flow meter (1) for measuring a flow velocity or a volume flow of a medium flowing through a pipe (11), comprising:
- at least one ultrasonic transducer, in particular at least one pair of ultrasonic transducers (10), wherein the at least one ultrasonic transducer is attached to the pipe (11) with a particularly round cross-section or to a measuring tube (12) of the flow meter integrated into the pipe with a particularly round cross-section,
- an electronic measuring/operating circuit (20) for operating the at least one ultrasonic transducer and for evaluating measurement signals from the at least one ultrasonic transducer and providing measured values,
wherein the pipeline or measuring tube has a diameter (13.1) in cross-sections in a longitudinal section containing a pipeline axis or measuring tube axis
, wherein the at least one ultrasonic transducer is arranged in an associated cross-section with respect to the diameter at a circumferential distance,
wherein each ultrasonic transducer is assigned a counterweight (14), in particular exactly one counterweight (14), which is spaced apart with respect to the vertical diameter opposite to the ultrasonic transducer,
**characterized in that** the ultrasonic transducer and the associated counterweight (14) are connected by a flexible, and in particular resilient, connecting element (15), such as a belt or a rope or a chain or a spring, which connecting element runs above, in particular exclusively above, the measuring tube or the pipeline,
wherein the flexible connecting element (15) is in a tensioned state by the ultrasonic transducer and the counterweight when the clamp-on ultrasonic flow meter (1) is arranged on the pipeline or on the measuring pipe.

2. Clamp-on ultrasonic flow meter according to claim 1,
wherein each ultrasonic transducer has a first circumferential distance (13.2) from the vertical diameter starting from a starting point to a center of gravity of the respective ultrasonic transducer, wherein the counterweight (14) has
a second circumferential distance (13.2) from the vertical diameter,
wherein amounts of the first circumferential distance and the second circumferential distance deviate less than 20% from a mean value of the amounts.

3. Clamp-on ultrasonic flow meter according to claim 1 or 2,
wherein each ultrasonic transducer (10) has a first mass, wherein the counterweight (14) having a second mass,
wherein the first mass and the second mass deviate less than 20% from a mean value of the masses.

4. Clamp-on ultrasonic flow meter according to any of the preceding claims,
wherein the attachment of the at least one ultrasonic transducer to the measuring tube or
the pipe is effected by means of a magnet (16) or a tension belt (17.1) or chain (17.2) spanning the measuring tube or pipe.

5. Clamp-on ultrasonic flow meter according to one of the preceding claims,
wherein the counterweight (14) has an anti-slip surface (14.1), which surface is in contact with the measuring tube (12) or the pipeline (11).

6. Clamp-on ultrasonic flow meter according to claim 5,
wherein the slip resistance
by means of surface structuring, such as a pyramid or needle structure,
or by an elastomer such as acrylonitrile-butadiene rubber or silicone,
or by a self-adhesive coating.

7. Clamp-on ultrasonic flow meter according to any of claims 4 to 6,
wherein the ultrasonic transducer (10) and counterweight (14) are each attached to the tension strap by a fastening such as crimping, screwing, gluing, welding, or riveting.

8. Clamp-on ultrasonic flow meter according to any one of claims 4 to 7,
wherein the tension strap (17) forms the flexible connecting element (15).

9. Clamp-on ultrasonic flow meter according to one of the preceding claims,
wherein the flexible connecting element (15) is made of at least one of the following materials:
a metallic material such as steel or, in particular, stainless steel, or
glass, carbon, polymer.

10. Clamp-on ultrasonic flow meter according to one of the preceding claims, unless directly or indirectly dependent on claim 4,
wherein the flexible connecting element (15) has a spring constant greater than 50 newtons per millimeter in a longitudinal direction of the connecting element (15), and
in particular greater than 80 Newtons per millimeter and preferably greater than 100 Newtons per millimeter.

11. Clamp-on ultrasonic flow meter according to any of claims 4 to 9 except 7,
wherein the flexible connecting element (15) has a spring constant greater than 50 Newtons per millimeter in a longitudinal direction of the connecting element (15), and
element (15), has a spring constant greater than 500 Newtons per millimeter, and
in particular greater than 800 Newtons per millimeter and preferably greater than 1000 Newtons per millimeter,
and/or
wherein the flexible connecting element (15) is arranged in a longitudinal direction of the connecting element (14) and is connected to the connecting element (14) in a manner such that the connecting element (14) can be moved in a direction parallel to the longitudinal direction of the connecting element (14) when the connecting element (14) is moved in a direction perpendicular to the longitudinal
element (15) has a spring constant which is at least a factor of 2 and
in particular at least a factor of 4 greater than a spring constant of the tensioning strap or chain along a corresponding longitudinal direction.

12. Clamp-on ultrasonic flow meter according to one of the preceding claims,
comprising at least two pairs of ultrasonic transducers, wherein each ultrasonic transducer (10) of two pairs of ultrasonic transducers forms the counterweight (14) of the respective other ultrasonic transducer of the two pairs of ultrasonic transducers.

13. Clamp-on ultrasonic flow meter according to one of claims 1 to 11,
wherein the counterweight (14) is neither designed and/or suitable for generating ultrasonic waves nor for receiving ultrasonic waves.

14. Clamp-on ultrasonic flow meter according to claim 13,
wherein the counterweight (14) does not have an ultrasonic transducer or no ultrasonic transducer is arranged on the counterweight (14).

15. Clamp-on ultrasonic flow meter according to one of the preceding claims,
wherein the ultrasonic transducer, the counterweight (14), and the connecting element (15) are designed such that the ultrasonic transducer remains in its mounting position in the event of mechanical deformation of the pipeline or measuring tube, in particular due to temperature.

## Revendications

1. Débitmètre à ultrasons à pince (1) pour mesurer une vitesse d'écoulement ou un débit volumique d'un fluide s'écoulant dans une conduite (11), comprenant :
- au moins un transducteur à ultrasons, en particulier au moins une paire de transducteurs à ultrasons (10), le ou les transducteurs à ultrasons étant fixés à la conduite (11) de section notamment circulaire ou à un tube de mesure (12) du débitmètre intégré dans la conduite et de section notamment circulaire,
- un circuit électronique de mesure/fonctionnement (20) pour faire fonctionner le au moins un transducteur à ultrasons ainsi que pour évaluer les signaux de mesure du au moins un transducteur à ultrasons et fournir des valeurs de mesure,
la conduite ou le tube de mesure présentant dans ses sections transversales un diamètre (13.1) dans une coupe longitudinale contenant un axe de conduite ou un axe de tube de mesure
, le au moins un transducteur à ultrasons étant disposé dans une section transversale associée à distance circonférentielle par rapport au diamètre,
chaque transducteur à ultrasons étant associé à un contrepoids (14), en particulier exactement un contrepoids (14), qui est espacé du transducteur à ultrasons en sens opposé par rapport au diamètre vertical,
**caractérisé en ce que** le transducteur à ultrasons et le contrepoids associé (14) sont reliés par un élément de liaison flexible, en particulier élastique (15), tel qu'une sangle, un câble, une chaîne ou un ressort, lequel élément de liaison s'étend au-dessus, en particulier exclusivement au-dessus, du tube de mesure ou de la conduite.
l'élément de liaison flexible (15) se trouvant, lorsque le débitmètre à ultrasons à pince (1) est disposé sur la conduite ou sur le tube de mesure, dans un état tendu par le transducteur à ultrasons et le contrepoids.

2. Débitmètre à ultrasons à fixation par serrage selon la revendication 1,
chaque transducteur à ultrasons présentant, à partir d'un point de départ jusqu'à un centre de gravité du transducteur à ultrasons respectif, une première distance circonférentielle (13.2) par rapport au diamètre vertical, le contrepoids (14)
une deuxième distance circonférentielle (13.2) par rapport au diamètre vertical,
les valeurs de la première distance circonférentielle et de la deuxième distance circonférentielle s'écartant de moins de 20 % d'une valeur moyenne des valeurs.

3. Débitmètre à ultrasons à pince selon la revendication 1 ou 2,
chaque transducteur à ultrasons (10) ayant une première masse, le contrepoids (14) ayant chacun une deuxième masse,
la première masse et la deuxième masse s'écartant de moins de 20 % d'une valeur moyenne des masses.

4. Débitmètre à ultrasons à pince selon l'une des revendications précédentes,
la fixation d'au moins un transducteur à ultrasons sur le tube de mesure ou sur la conduite est réalisée respectivement au moyen d'un aimant (16) ou d'une sangle de serrage (17.1) ou d'une chaîne (17.2) entourant le tube de mesure ou la conduite.

5. Débitmètre à ultrasons à fixation par serrage selon l'une des revendications précédentes,
le contrepoids (14) présentant une surface antidérapante (14.1) qui est en contact avec le tube de mesure (12) ou la conduite (11).

6. Débitmètre à ultrasons à fixation par serrage selon la revendication 5,
dans lequel la résistance au glissement
par une structuration de surface telle qu'une structure pyramidale ou aiguillettée,
ou par un élastomère tel que le caoutchouc acrylonitrile-butadiène ou silicone,
ou par un revêtement autocollant.

7. Débitmètre à ultrasons à pince selon l'une des revendications 4 à 6,
dans lequel le transducteur à ultrasons (10) et le contrepoids (14) sont chacun fixés à la sangle de serrage par une fixation telle que sertissage, vissage, collage, soudage, rivetage.

8. Débitmètre à ultrasons à pince selon l'une des revendications 4 à 7,
la sangle de serrage (17) formant l'élément de liaison flexible (15).

9. Débitmètre à ultrasons à pince selon l'une des revendications précédentes,
dans lequel l'élément de liaison flexible (15) est fabriqué à partir d'au moins l'un des matériaux suivants :
un matériau métallique tel que l'acier ou, en particulier, l'acier inoxydable, ou
un verre, du carbone, un polymère.

10. Débitmètre à ultrasons à fixation par serrage selon l'une des revendications précédentes, à condition qu'il ne dépende pas directement ou indirectement de la revendication 4,
l'élément de raccordement flexible (15) ayant, dans une direction longitudinale de l'élément de raccordement (15), une constante de rappel supérieure à 50 newtons par millimètre, et
en particulier supérieure à 80 newtons par millimètre et de préférence supérieure à 100 newtons par millimètre.

11. Débitmètre à ultrasons à fixation par serrage selon l'une des revendications 4 à 9 sans la revendication 7,
l'élément de liaison flexible (15) présentant, dans une direction longitudinale de l'élément de liaison
(15) une constante de ressort supérieure à 500 newtons par millimètre, et en particulier supérieure à 800 newtons par millimètre et de préférence supérieure à 1000 newtons par millimètre,
et/ou
l'élément de liaison flexible (15) étant disposé dans une direction longitudinale de l'élément de liaison
(15) présente une constante de ressort qui est au moins deux fois plus grande et en particulier d'au moins un facteur 4 supérieure à une constante de rappel de la sangle de tension ou de la chaîne le long d'une direction longitudinale correspondante.

12. Débitmètre à ultrasons à fixation rapide selon l'une des revendications précédentes,
comprenant au moins deux paires de transducteurs à ultrasons, un transducteur à ultrasons de deux paires de transducteurs à ultrasons forme le contrepoids (14) de l'autre transducteur à ultrasons des deux paires de transducteurs à ultrasons.

13. Débitmètre à ultrasons à fixation par serrage selon l'une des revendications 1 à 11,
le contrepoids (14) n'étant ni conçu ni adapté pour générer des ondes ultrasonores ni pour recevoir des ondes ultrasonores.

14. Débitmètre à ultrasons à pince selon la revendication 13,
dans lequel le contrepoids (14) ne comporte pas de transducteur ultrasonore ou aucun transducteur ultrasonore n'est disposé sur le contrepoids (14).

15. Débitmètre à ultrasons à pince selon l'une des revendications précédentes,
dans lequel le transducteur à ultrasons, le contrepoids (14) et l'élément de liaison (15) sont conçus de telle sorte que le transducteur à ultrasons reste dans sa position de montage en cas de déformation mécanique, notamment due à la température, de la conduite ou du tube de mesure.
